Europäisches Patentamt

European Patent Office

Office européen des brevets

(19)

(11) Numéro de publication: **0 073 728**
**B1**

(12) **FASCICULE DE BREVET EUROPEEN**

(51) Int. Cl.⁴: **G 21 C 5/06**, G 21 C 3/32,
**F 16 L 37/00**

(45) Date de publication du fascicule du brevet:
**13.11.85**

(21) Numéro de dépôt: **82420122.2**

(22) Date de dépôt: **25.08.82**

(54) **Dispositif de jonction démontable pour assemblage combustible pour réacteur nucléaire.**

(30) Priorité: **26.08.81 FR 8116605**

(43) Date de publication de la demande:
**09.03.83 Bulletin 83/10**

(45) Mention de la délivrance du brevet:
**13.11.85 Bulletin 85/46**

(84) Etats contractants désignés:
**AT BE CH DE GB IT LI LU NL SE**

(56) Documents cités:
**FR - A - 1 392 932**
**FR - A - 1 452 399**
**FR - A - 2 276 494**
**FR - A - 2 341 917**
**GB - A - 907 535**
**US - A - 3 349 004**
**US - A - 3 769 158**
**US - A - 4 219 386**

(73) Titulaire: **URANIUM PECHINEY, 23 bis rue Balzac,**
**F-75360 Paris Cedex 08 (FR)**

(72) Inventeur: **Blum, Jacques, 5, rue Voltaire,**
**F-92300 Levallois (FR)**

(74) Mandataire: **Séraphin, Léon et al, PECHINEY 28, rue de**
**Bonnel, F-69433 Lyon Cedex 3 (FR)**

## Description

Le dispositif qui fait l'objet de l'invention concerne les assemblages combustibles pour réacteurs nucléaires et plus particulièrement ceux qui sont utilisés dans les réacteurs nucléaires refroidis par un fluide tel que de l'eau bouillante ou pressurisée.

Il concerne plus précisément les jonctions qui sont réalisées entre les plaques d'extrémité supérieures et inférieures de ces assemblages combustibles. Chacun de ces assemblages est constitué d'un ensemble de crayons combustibles, constitués d'une gaine métallique étanche, à l'intérieur de laquelle est logée la matière fissile ou fertile, maintenus de distance en distance, à un écartement approprié, au moyen de grilles d'espacement. Dans la majorité des cas, ces grilles d'espacement sont elles-mêmes maintenues à la distance voulue les unes des autres par un petit nombre de tubes ou tiges di liaison dont les extrémités sont fixées aux plaques d'extrémité supérieure et inférieure. Lorsqu'il s'agit de tubes de liaison, ceux-ci sont le plus souvent utilisés pour le guidage des barres de contrôle. Cette fonction de liaison peut aussi être assurée par des tiges qui s'étendent sur toute la longueur de l'assemblage ou encore qui prolongent certains crayons combustibles. L'ensemble constitué par ces tubes ou tiges de liaison, les grilles d'espacement et les deux plaques d'extrémité constitue le squelette.

C'est en partant de ce squelette qu'on réalise l'assemblage combustible en glissant les crayons combustibles à travers les orifices prévus à cet effet dans les grilles d'espacement. Pour effecteur cette opération, l'une des plaques d'extrémité n'est généralement pas montée. Une fois la mise en place des crayons combustibles achevée, cette deuxième plaque d'extrémité est mise en place définitivement. Il n'est alors plus possible d'introduire dans l'assemblage ou d'extraire de celui-ci des éléments combustibles.

La jonction entre les tubes guides et chacune des plaques d'extrémité peut être réalisée par différentes méthodes telles que le soudage ou le vissage. A partir de ce moment là, l'assemblage combustible n'est pratiquement plus démontable, en particulier lorsqu'il a subi un séjour en réacteur, avec irradiation intense et prolongée, après lequel sa manipulation n'est possible que dans une enceinte blindée ou dans une piscine sous une couche de plusieurs mètres d'eau.

L'expécrience a montré que dans un certain nombre de cas, il serait avantageux de pouvoir accéder facilement aux crayons combustibles afin d'en remplacer éventuellement un ou plusieurs et aussi éventuellement de pouvoir remplacer certains constituants du squelette ou remédier à certains défauts.

L'expérience a montré jusqu'à maintenant que de telles opérations sont rendues quasi impossibles à cause de la nature de la jonction entre tube ou tige de liaison et plaque d'extrémité.

Dans le brevet US-A-3 349 004, il a été proposé de rendre amovibles certains crayons combustibles en prévoyant de pouvoir leur faire traverser la plaque d'extrémité supérieure. Dans ce but, cette plaque d'extrémité comporte des trous disposés dans le prolongement des crayons amovibles. Chacun de ces crayons est prolongé par une tige d'extrémité qui est engagée dans un trou. Le diamètre de chaque trou est tel qu'il permet l'introduction d'une pièce annulaire qui peut coulisser autour de la tige d'extrémité du crayon. Cette pièce annulaire comporte à son extrémité inférieure un ergot qui fait saillie de façon radiale en direction de l'extérieur et peut s'engager dans une encoche réalisée à la périphérie du trou dans la paroi de la plaque d'extrémité qui regarde le crayon combustible. Une rainure réalisée le long d'une génératurice sur la paroi intérieure du trou et à l'opposé de l'encoche permet le passage de la pièce annulaire à travers le trou à condition de la tourner de façon que l'ergot puisse s'y engager. Enfin, lorsque le crayon combustible est en place ainsi que la pièce annulaire avec son ergot engagé dans l'encoche, un ressort hélicoïdal qui entoure le crayon exerce sur celui-ci une pression dirigée vers le bas en prenant appui d'une part sur la partie inférieure de la pièce annulaire et d'autre part sur un épaulement disposé sur le crayon lui-même.

De cette façon, l'extrémité inférieure du crayon est maintenue dans son logement dans la plaque inférieure.

Une telle disposition permet effectivement le démontage de quelques crayons combustibles mais ne permet aps d'enlever la plaque d'extrémité qui demeure fixée par des vis à l'extrémité d'un certain nombre de crayons combustibles fixes. Il est donc impossible de démonter d'autres crayons combustibles que ceux dont l'amovibilité a été prévue. Par ailleurs, l'ergot utilisé pour maintenir en place le crayon combustible ne limite son déplacement relatif par rapport à la plaque d'extrémité que dans une seule direction et ne pourrait donc permettre de réaliser une liaison fixe de ladite plaque par rapport à l'assemblage combustible. Enfin, la tenue mécanique d'un tel ergot et les contraintes dissymétriques qu'il crée ne permettraient pas de l'utiliser pour la réalisation d'une jonction efficace entre une plaque d'extrémité et un tube ou une tige de liaison d'un assemblage combustible.

On a donc recherché la possibilité de réaliser un dispositif assurant une ou des jonctions démontables entre une plaque d'extrémité et un assemblage combustible, cette ou ces jonctions étant d'une part capables de résister à toutes les contraintes d'exploitation et d'autre part aptes à pouvoir être effectivement démontées au moyen d'outils commandés à distance, simples et robustes et faciles à mettre en oeuvre, par exemple dans une piscine remplie d'eau. Un tel dispositif devait permettre en particulier de pouvoir désolidariser rapidement la plaque d'extrémité d'avec l'assemblage combustible de façon à intervenir efficacement et à pouvoir, par exemple, démonter ou un plusieurs crayons. Enfin, ce dispositif devait aussi permettre de remonter l'assemblage combustible en rétablissant la ou les jonctions avec la plaque d'extrémité de façon simple et rapide.

Le dispositif qui fait l'objet de l'invention permet d'assurer une jonction démontable entre un tube ou tige de liaison d'un assemblage combustible nucléaire et une plaque d'extrémité. La jonction est réalisée au niveau du passage de l'extrémité du tube ou de la tige de liaison à travers un trou percé dans la plaque d'extrémité. Cette jonction comporte au moins une ailette radiale disposée autour du tube ou de la tige de liaison qui peut s'engager par déplacement angulaire de l'axe du trou dans au moins un logement réalisé dans les parois du trou, ce dispositif est caractérisé en ceque les efforts exercés sur la jonction ainsi réalisée, dans chacun des deux sens parallèlement à l'axe du trou, sont contrecarrés par la mise en appui d'au moins l'un des flancs de l'ailette contre une face d'appui fixe solidaire de la plaque d'extrémité.

La description et les figures 1 à 3 permettent de mieux comprendre les caractéristiques du dispositif suivant l'invention et plus particulièrement différents modes avantageux de réalisation de ce dispositif.

Figure 1: vue en élévation et en coupe d'un premier mode de réalisation d'un dispositif de jonction suivant l'invention entren un tube de liaison et une plaque d'extrémité.

Figure 2: vue en plan suivant A de l'extrémité du tube de liaison de la figure 1.

Figure 3: vue en plan suivant B de la plaque d'extrémité de la figure 1.

Figure 4: vue en élévation et en coupe d'un deuxième mode de réalisation d'un dispositif de jonction suivant l'invention entre un tube de liaison et une plaque d'extrémité.

Figure 5: vue en élévation et en coupe d'une variante du dispositif de jonction de la figure 4.

Figure 6: vue en élévation et en perspective d'un troisième mode de réalisation du dispositif de jonction suivant l'invention entre un tube ou une tige de liaison et une plaque d'extrémité.

Figure 7: vue en plan de la face inférieure de la plaque d'extrémité dans laquelle sera engagé le tube ou la tige de liaison de la figure 6.

Figure 8: vue en coupe suivant A de la plaque d'extrémité de la figure 7.

Figure 9: vue en coupe suivant B de la plaque d'extrémité de la figure 7.

Figure 10: vue en coupe suivant C de la plaque d'extrémité de la figure 7 au-dessous de laquelle est disposé le tube ou la tige de liaison avant engagement.

Figure 11: vue en élévation et en perspective d'un quatrième mode de réalisation du dispositif de jonction suivant l'invention.

Figure 12: vue en coupe suivant A de la plaque d'extrémité de la figure 13 dans laquelle est engagé le tube de liaison de la figure 11 également figuré en coupe.

Figure 13: vue en plan de la face inférieure de la plaque d'extrémité de la figure 12.

### Exemple 1

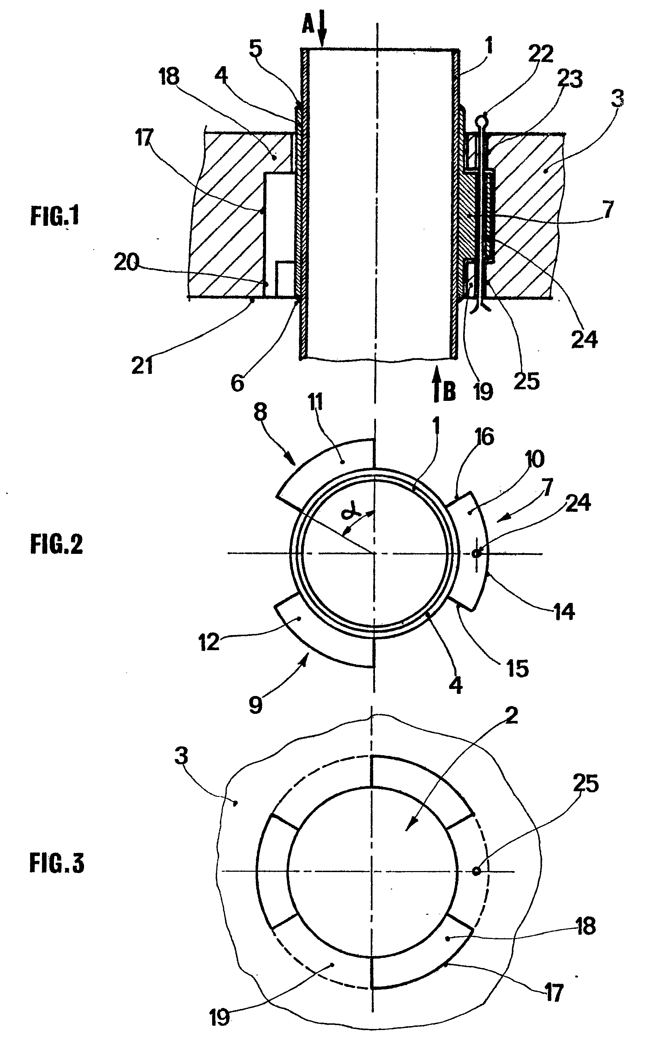

On voit figures 1 à 3 un premier mode de réalisation du dispositif de jonction suivant l'invention appliqué à la jonction d'un tube de liaison d'un assemblage combustible avec une plaque d'extrémité supérieure. Les figures représentent seulement le détail de la jonction.

L'extrémité du tube de liaison (1) traverse un trou (2) percé dans la plaque d'extrémité (3); une bague (4) entoure le tube de liaison (1) et est liée à celui-ci par soudage ou brasage en (5) et (6). Cette bague comporte 3 ailettes radiales (7, 8, 9) identiques disposées de façon symétrique à 120° les unes des autres autour de l'axe du tube et s'étendant chacune sur un secteur dont l'angle au sommet ($\alpha$) est de l'ordre de 60°. Les flancs supérieurs (10, 11 et 12) des ailettes sont dans un même plan perpendiculaire à l'axe et il en est de même pour les flancs inférieurs. Le bord périphérique des ailettes tel que (14) est cylindrique et enfin les côtés tels que (15, 16) sont dans des plans passant par l'axe.

Comme le montrent les figures 1 et 2, les parois du trou (2) percé dans la plaque d'extrémité (3) comportent un logement en forme de gorge annulaire (17) à fond cylindrique qui épouse la forme des ailettes. Cette gorge est réalisée sensiblement à mi-épaisseur de la plaque (3) de façon que les rebords annulaires (18) et (19) aient sensiblement la même épaisseur. On voit que le rebord (18) est continu tandis que le rebord (19) comporte des zones découpées dans trois secteurs disposés à 120° autour de l'axe et s'étendant chacun sur environ 60° de façon à permettre l'entrée des ailettes. Dans ces trois secteurs, le fond cylindrique de la gorge, grâce à la découpe effectuée, est prolongé latéralement en (20) jusqu'à la face inférieure (21) de la plaque. Ceci permet, en introduisant l'extrémité du tube (1) dans le trou (2) à partir de la face inférieure de la plaque, d'engager les ailettes dans le trou en les orientant convenablement. Il suffit ensuite d'effectuer une rotation de 60° pour enserer chacune d'entre elles dans la gorge entre les deux rebords (18) et (19) ce qui empêchera ensuite tout déplacement du tube par rapport à la plaque d'extrémité dans les deux directions axiales. Pour éviter les risques de déverrouillage par rotation accidentelle du tube, on a prévu un moyen de bloquage angulaire qui empêche toute rotation du tube autour de son axe par rapport à la plaque. Ce moyen est constitué, par exemple, par une goupille (22) qui traverse les trous (23, 24 et 25) percés respectivement dans le rebord (18), l'ailette (7) et le rebord (19).

De très nombreuses modifications peuvent être apportées à ce premier mode de réalisation de l'invention. On peut, en particulier, faire varier le nombre et la forme des ailettes. On peut envisager aussi de disposer les ailettes de façon non symétrique autour de l'axe, les découpes effectuées sur le rebord de la gorge reproduisant la disposition des ailettes de façon qu'il y ait une seule position angulaire d'introduction des ailettes dans la gorge pour réduire les risques de déverrouillage.

On peut, en particulier dans ce cas, réaliser un dispositif de jonction comportant une seule ailette qui peut, par exemple, s'étendre sur un secteur angulaire de près de 180°. On peut aussi effectuer la découpe du rebord de la gorge soit sur la face inférieure de la plaque comme dans le cas de la figure 1, soit sur l'autre face, soit encore sur les deux faces de façon à permettre l'engagement du tube à travers le trou d'un côté ou de l'autre et permettre ainsi l'extraction du tube à travers la plaque si on le souhaite. Les possibilités d'adaptation du dispositif de jonction suivant l'invention sont donc considérables et on peut, en particulier, donner aux ailettes les dimensions voulues pour assurer à la liaison la tenue mécanique et la rigidité désirée. On doit observer enfin que les plaques d'extrémité ont généralement des formes complexes et comportent de nombreux passages pou assurer la circulation du fluide de refroidissement. Les figures ont été volontairement limitées à la représentation de la jonction suivant l'invention et ne prétendent pas décrire dans ses détails une plaque d'extrémité, d'un modèle utilisé effectivement pour la réalisation d'assemblages combustibles.

Exemple 2

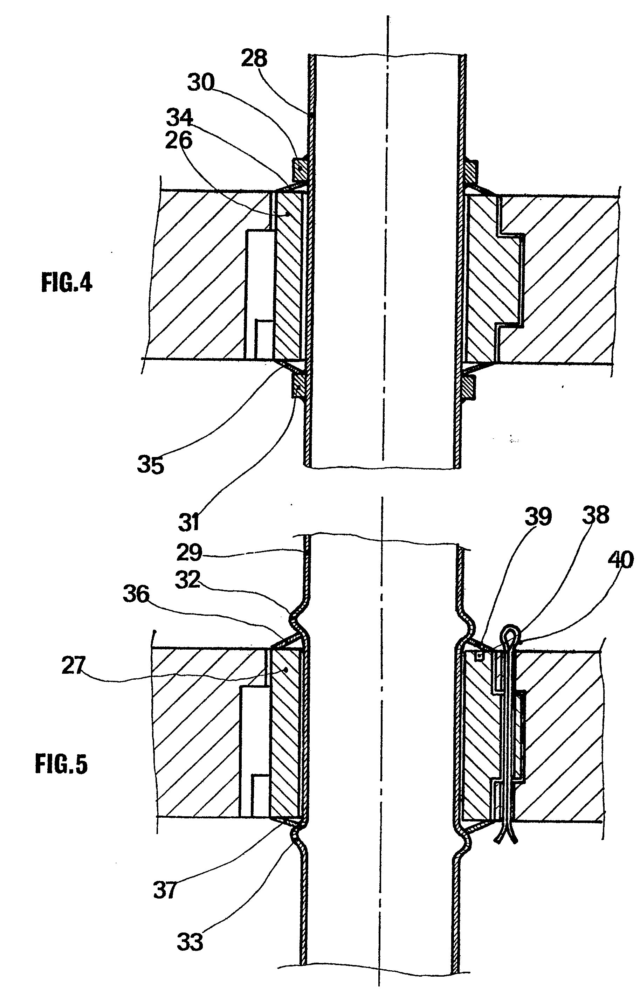

Les figures 4 et 5 représentent un deuxième mode de réalisation du dispositif de jonction suivant l'invention.

On voit ici que les baques (26) ou (27) qui entourent les tubes de liaison (28) ou (29) sont mobiles en rotation par rapport aux tubes. Par contre, des moyens de butée constitués par des anneaux (30, 31) soudés sur le tube (28) ou des renflements annulaires (32, 33) réalisés sur le tube (29) et situés dans les deux cas de part et d'autre des bagues (26, 27) empêchent le déplacement de celles-ci le long de l'axe.

Des rondelles élastiques tronconiques (34, 35, 36 et 37) ont été prévues pour donner une certaine élasticité à la liaison dans les deux directions axiales, ceci permettant de rattraper de légers écarts de longueur entre les différents tubes de liaison, causés éventuellement par des phénomènes de dilatation différentielle.

Les bagues (26) et (27) comportent, comme dans le cas de l'exemple 1, trois ailettes radiales à 120° qui s'engagent dans une gorge réalisée de la même façon que dans le cas de cet exemple.

Pour faciliter la rotation de la bague de façon à la mettre en position de mise en place puis verrouillage, ou au contraire pour pouvoir la déverrouller, il est avantageux de prévoir sur la face frontale supérieure de la bague des moyens de préhension permettant de la faire tourner au moyen d'une clé convenable. On peut ainsi réaliser des trous borgnes tels que (38) qu'on pourra faire correspondre avec des trous tels que (39) percés dans la rondelle telle que (36). Le blocquage angulaire de la bague (27) pourra être assuré de la même façon que dans l'exemple 1 par une goupille (40).

Exemple 3

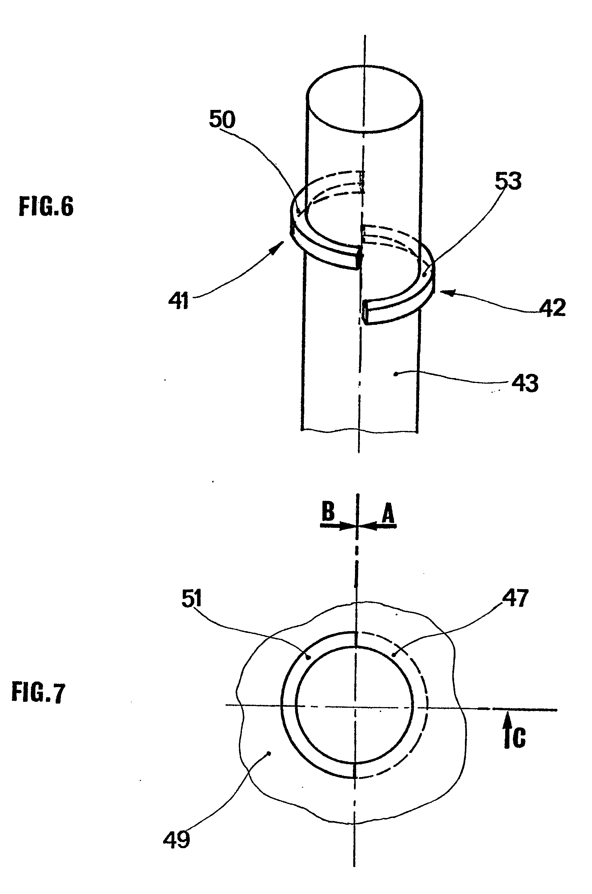

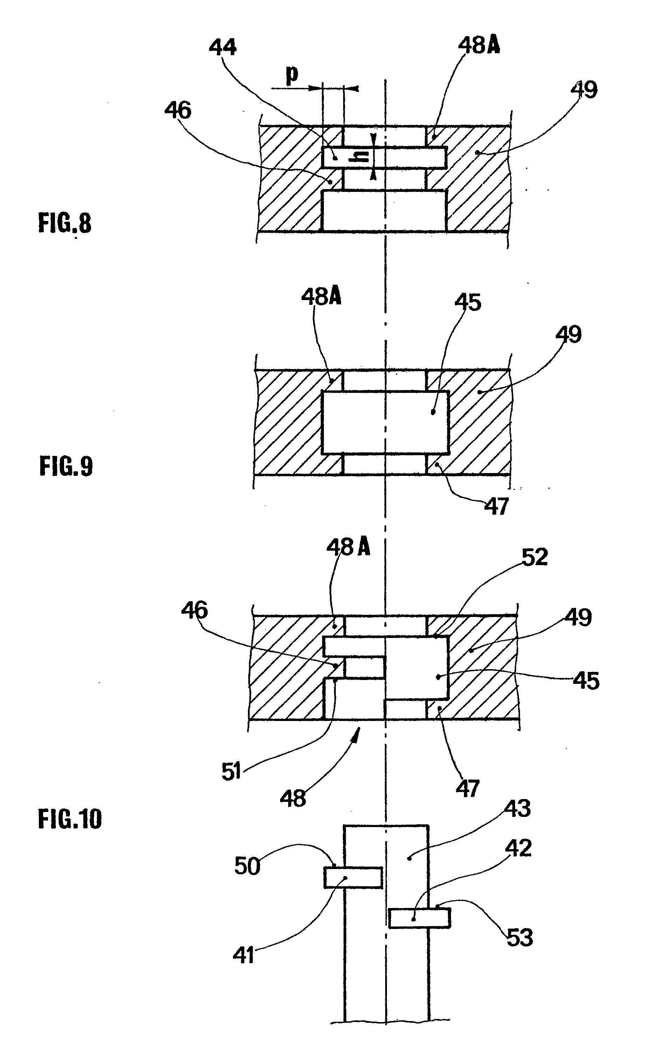

On voit figures 6 à 10, un autre mode de réalisation du dispositif de jonction suivant l'invention, dans lequel les ailettes radiales ne sont pas disposées dans un même plan perpendiculaire à l'axe du tube ou de la tige de liaison mais selon des plans décalés lelong de cet axe.

Les deux ailettes radiales (41) et (42) de même section occupent chacune un secteur de près de 180° autour de l'axe du tube de liaison (43). Ces ailettes ont des flancs sensiblement plans et des bords périphériques cylindriques. La plaque d'extrémité comporte un trou destiné à recevoir l'extrémité du tube de liaison (43) dans laquel des gorges ont été usinées de la façon représentée par les figures 7 à 10.

La gorge (44) a une profindeur (p) et une hauteur (h) déterminées pour recevoir avec un faible jeu l'ailette (41). Elle s'étend sur 180°.

La gorge (45) a la Même profondeur que la gorge (44) et une hauteur triple; elle s'étend aussi sur 180°. Les rebords (46) et (47) ont des hauteurs égales, légèrement inférieures à la hauteur de la gorge (44). On remarque que les deux gorges (44) et (45) ont pour rebord supérieur (48A) la paroi primitive du trou (48) dans la zone où elle n'a pas été entaillée.

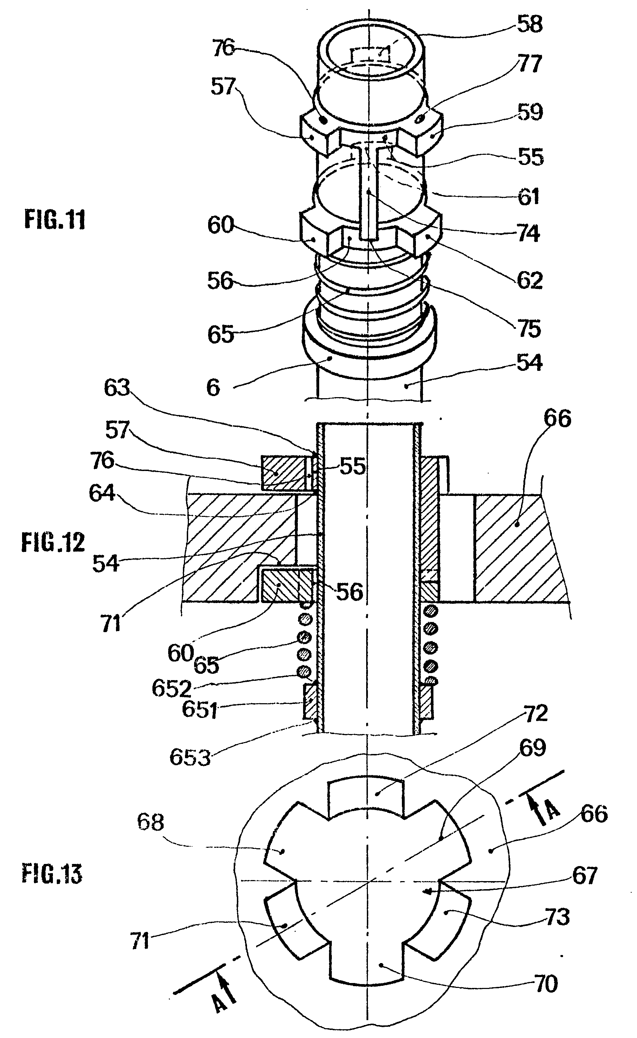

Enfin, la distance mesurée le long de l'axe du tube qui sépare les flancs en regard des deux ailettes es légèrement supérieure à la hauteur des rebords (46) et (47). On comprend que dans ces conditions on puisse, comme le montre la figure 10, engager dans le trou (48) de la plaque d'extrémité (49) l'extrémité d'un tube ou d'une tige de liaison (43) jusqu'à ce que le flanc (50) de l'ailette supérieure (41) vienne en appui contre le flanc (51) du rebord (46).

Une rotation de 180° de l'ensemble des deux ailettes autour de l'axe permet d'engager le tube dans la plaque d'extrémité jusqu'à ce que le flanc (50) de l'ailette supérieure vienne en appui contre le flanc (52) de la gorge (45). En même temps, le flanc (53) de l'ailette inférieure (42) vient en appui contre le flanc (51) de rebord (46). Une deuxième rotation de 180° permet un verrouillage de la jonction, l'ailette (41) venant se loger dans la gorge (44) et l'ailette (42) dans la gorge (45).

On remarque que seule l'ailette (41) est bloquée dans les deux directions, tandis que le blocage de l'ailette (42) n'est effectif que dans une seule direction. Un montage plus symétrique serait possible en utilisant quatre ailettes occupant chacune un secteur de 90°, le motif constitué par les deux ailettes décalées étant répété deux fois à l'identique autour de la circonférence et les gorges usinées dans le trou de la plaque d'extrémité, étant également réalisées suivant un motif homologue répété deux fois à l'identique.

Il serait possible également de fixer les ailettes (41) et (42) non pas directement sur le tube ou la tige de liaison (43) mais sur une bague entourant cette tige et pouvant tourner librement autour d'elle. Un moyen de bloquage, par goupille ou autre, des ailettes dans leur logement, semblable or équivalent à celui indiqué dans l'exemple 2, peut être utilisé dans un cas comme dans l'autre.

Exemple 4

Un autre mode de réalisation du dispositif de jonction suivant l'invention consiste à disposer autour de l'extrémité d'un même tube ou d'une même tige de liaison deux séries d'ailettes radiales constituant une couronne supérieure et une couronne inférieure.

Le dispositif est conçu de façon telle que, après introduction de l'extrémité du tube ou de la tige de liaison dans la plaque d'extrémité, les ailettes supérieures viennent en appui contre la face supérieure de la plaque d'extrémité, tandis que les ailettes inférieures viennent en appui contre la face de la même plaque. De préférence, ces ailettes sont maintenues en place par des moyens de bloquage tels que des goupilles ou encore par engagement dans des logements ménagés dans au moins une des deux faces de la plague d'extrémité.

Comme le montrent les figures 11 à 13, on peut en particulier disposer autour de l'extrémité d'un tube de liaison (54) deux couronnes (55) et (56) comportant chacune trois ailettes (57, 58 et 59) et (60, 61 et 62). La couronne supérieure (55) est soudée ou brasée en (63, 64) au tube (54). La couronne inférieure (56) est mobile et peut donc tourner autour du tube ou glisser par rapport à son axe. Un ressort de compression (65) qui prend appui sur une butée annulaire (651) soudée ou brasée au tube en (652, 653) pousse la couronne (56) en direction de la couronne (55). De cette façon, après mise en place du dispositif de jonction comme le montre la figure 12, les ailettes telles que (57) et (60) enserrent la plaque d'extrémité (66).

On voit figure 13, en plan, la face inférieure de la plaque d'extrémité (66). Le trou cylindrique (67) qui traverse cette plaque comporte trois rainures (68, 69 et 70) usinées suivant trois génératrices disposées à 120° les unes des autres autour de l'axe du trou. Chacune de ces rainures dans le cas de la figure 13 a une largeur constante qui correspond à un arc de 60° mesuré sur la circonférence du trou. Ces trois rainures débouchent sur les deux faces de la plaque d'extrémité et leurs dimensions sont telles que les trois ailettes (57, 58 et 59) de la couronne supérieure peuvent les traverser. Entre ces rainures, trois logements (71, 72 et 73) sont usinés également suivant trois génératrices à 120° qui sont décalées de 60° par rapport aux génératrices des rainures. Ces logements ont une profondeur de préférence voisine de la hauteur des ailettes de la couronne inférieure comme le monte la figure 12. La section de ces logements est déterminée de façon que ces ailettes s'engagent facilement dedans pour les bloquer en rotation. Les deux couronnes sont de préférence rendues solidaires en rotation, par exemple, par au moins une languette telle que (74), qui s'engage dans une encoche telle que (75). Ainsi est-on assuré que, lorsque les ailettes inférieures sont engagées dans leur logement, les ailettes supérieures qui se trouvent en regard sont bien en appui sur la face supérieure de la plaque d'extrémité.

D'autres moyens peuvent être envisagés pour bloquer en rotation l'une des couronnes par rapport à l'autre. Pour le démontage, on peut prévoir des trous tels que (76, 77) qui traversent les ailettes supérieures au voisinage de la surface extérieure du tube et permettent le passage de broches dans l'espace annulaire entre la paroi extérieure du tube et la paroi intérieure du trou. De telles broches permettent de repousser les ailettes inférieures en dehors des logements. Un déplacement angulaire de 60° autour de l'axe permet ensuite le déverrouillage. Les ailettes sont ainsi amenées en face des rainures et une traction permet alors de séparer la plaque d'extrémité d'avec le tube de liaison.

Dans ce cas aussi, un grand nombre de variantes peuvent être apportées à la réalisation de la jonction suivant l'invention.

On peut en particulier monter la couronne supérieure (55) de façon qu'elle soit libre en rotation en utilisant par exemple un montage analogue à celui untilisé pour la bague de la figure 4. On peut aussi prévoir des logements usinés dans la face supérieure de la plague d'extrémité (66) de façon à bloquer en rotation les ailettes de la couronne supérieure. Ces logements seront disposés de la même façon que ceux usinés dans la face inférieure.

Un très grand nombre de variantes du dispositif de jonction qui fait l'objet de l'invention peuvent être envisagées qui ne sortent pas du domaine de la protection accardée aux revendications qui suivent.

**Revendications**

1. Dispositif permettant d'assurer une jonction démontable entre un tube ou une tige de liaison (1, 28, 29, 43, 54) d'un assemblage combustible nucléaire et une plaque d'extrémité (3, 49, 66), dans lequel l'extrémité du tube ou de la tige de liaison traverse un trou (2, 48, 67) réalisé dans la plaque d'extrémité (3, 49, 66) comportant au moins une ailette radiale (7, 8, 9, 26, 27, 41, 42, 60), disposée autour du tube ou de la tige qui peut s'engager par déplacement angulaire de l'axe du trou dans au moins un logement (17, 44, 71) réalisé dans la paroi du trou, caractérisé en ce que les efforts exercés sur la jonction dans chacun des deux sens parallèlement à l'axe du trou sont contrecarrés par la mise en appui d'au moins l'un des flancs (10, 50) de l'ailette contre une face d'appui fixe des rebords (18, 48A), solidaires de la plaque d'extrémité ou contre la plaque d'extrémité elle-même (66).

2. Dispositif suivant revendication 1, caractérisé en ce que l'ailette est montée sur une bague (4, 26, 27, 55, 56) entourant le tube ou la tige de liaison (1, 28, 29, 54).

3. Dispositif suivant revendication 1 ou 2, caractérisé en ce que la bague (4, 55) qui entoure le tube ou la tige de liaison en est solidaire.

4. Dispositif suivant revendication 1 ou 2, caractérisé en ce que la bague (26, 27, 56) qui entoure le tube ou la tige de liaison est mobile en rotation autour de ce tube ou de cette tige de liaison.

5. Dispositif suivant l'une quelconque des revendications 1 à 4, caractérisé en ce que le logement dans lequel s'engage l'ailette est une gorge annulaire (17, 44, 45) dont l'un des rebords comporte au moins une découpe (20) permettant d'introduire l'ailette dans le trou.

6. Dispositif suivant l'une des revendications 1 à 5, caractérisé en ce qu'au moins deux ailettes (41, 42) sont disposées à des niveaux différents le long de l'axe du tube ou de la tige de liaison.

7. Dispositif suivant l'une des revendications 1 à 6, caractérisé en ce qu'il comporte deux couronnes (55, 56) sur chacune desquelles est montée au moins une ailette qui vient en appui respectivement sur la face supérieure et la face inférieure d'une même plaque d'extrémité (66).

8. Assemblage combustible, caractérisé en ce qu'au moins l'une des plaques d'extrémité est jonctionnée avec au moins un tube ou une tige de liaison par le dispositif suivant l'une des revendications 1 à 7.

**Patentansprüche**

1. Vorrichtung zum Herstellen einer lösbaren Verbindung zwischen einem Verbindungsrohr oder einer Verbindungsstange (1, 28, 29, 43, 54) einer Brennelementkassette eines Kernreaktors und einer Endplatte (3, 49, 66), in der das Ende des Verbindungsrohrs oder der Verbindungsstange eine in die Endplatte (3, 49, 66) eingearbeitete Öffnung (2, 48, 67) durchquert, wobei um das Rohr oder die Stange herum mindestens eine radiale Rippe (7, 8, 9, 26, 27, 41, 42, 60) angeordnet ist, die durch eine Drehbewegung um die Achse der Öffnung mit mindestens einem in die Wandung der Öffnung eingearbeiteten Sitz (17, 44, 71) in Eingriff gebracht werden kann, dadurch gekennzeichnet, daß die auf die Verbindung in den beiden zur Achse der Öffnung parallelen Richtungen ausgeübten Belastungen durch das Andrücken mindestens einer Flanke (10, 50) der Rippe gegen eine feste Auflagsfläche der mit der Endplatte fest verbundenen Ränder (18, 48A) oder gegen die Endplatte (66) selbst aufgefangen werden.

2. Vorrichtung nach Anspruch 1, dadurch gekennzeichnet, daß die Rippe auf einem das Verbindungsrohr oder die Verbindungsstange (1, 28, 29, 54) umgebenden Ring (4, 26, 27, 55, 56) montiert ist.

3. Vorrichtung nach Anspruch 1 oder 2, dadurch gekennzeichnet, daß der das Verbindungsrohr oder die Verbindungsstange umgebende Ring mit diesem (dieser) fest verbunden ist.

4. Vorrichtung nach Anspruch 1 oder 2, dadurch gekennzeichnet, daß der das Verbindungsrohr oder die Verbindungsstange umgebende Ring (26, 27, 56) um dieses (diese) drehbar gelagert ist.

5. Vorrichtung nach einem der Ansprüche 1 bis 4, dadurch gekennzeichnet, daß der Sitz, in den die Rippe eingreift, eine ringförmige Nut (17, 44, 45) ist, von der einer ihrer Ränder mindestens eine Aussparung (20) zur Einführung der Rippe in die Öffnung aufweist.

6. Vorrichtung nach einem der Ansprüche 1 bis 5, dadurch gekennzeichnet, daß auf verschiedenen Höhen entlang der Achse des Verbindungsrohres oder der Verbindungsstange mindestens zwei Rippen (41, 42) angeordnet sind.

7. Vorrichtung nach einem der Ansprüche 1 bis 6, gekennzeichnet durch zwei Kränze (55, 56), auf denen jeweils mindestens eine Rippe montiert ist, die jeweils auf der oberen bzw. der unteren Seite derselben Endplatte (66) zur Auflage kommt.

8. Demontierbare Brennelementkassette, dadurch gekennzeichnet, daß mindestens eine Endplatte mit mindestens einem Verbindungsrohr oder einer Verbindungsstange mittels der Vorrichtung nach einem der Ansprüche 1 bis 7 verbunden ist.

**Claims**

1. An arrangement for making a dismantleable connection between a connecting rod or tube (1, 28, 29, 43, 54) of a nuclear fuel assembly and an end plate (3, 49, 66) in which the end of the connecting rod or tube passes through a hole (2, 48, 67) proided in the end plate (3, 49, 66), comprising at least one radial fin (7, 8, 9, 26, 27, 41, 42, 60) disposed around the tube or the rod, which can be engaged by angular displacement about the axis of the hole in at least one recess (17, 44, 71) provided in the wall of the hole, characterised in that the forces applied to the connection in each of the two directions in parallel relationship to the axis of the hole are couteracted by at least one of the sides (10, 50) of the fin bearing against a fixed bearing face of the edge portions (18, 48A) which are fixed with respect to the end plate or against the end plate (66) itself.

2. An arrangement according to claim 1 characterised in that the fin is mounted on a ring (4, 26, 27, 55, 56) which is disposed around the connecting rod or tube (1, 28, 29, 54).

3. An arrangement according to claim 1 or claim 2 characterised in that the ring (4, 55) which is disposed around the connecting rod or the tube is fixed with respect thereto.

4. An arrangement according to claim 1 or claim 2 characterised in that the ring (26, 27, 56) which is disposed around the connecting rod or the tube is rotatable about said connecting rod or said tube.

5. An arrangement according to any one of claims 1 to 4 characterised in that the recess in which the fin is engaged is an annular groove (17, 44, 45), one of the edge portions of which comprises at least one cut-out portion (20) permitting the fin to be introduced into the hole.

6. An arrangement according to one of claims 1 to 5 characterised in that al least two fins (41, 42) are disposed at different levels along the axis of the connecting rod or the tube.

7. An arrangement according to one of claims 1 to 6 characterised in that it comprises two ring members (55, 56), on each of which is mounted at least one fin which respectively bears against the upper face and the lower face of the same end plate (66).

8. A dismantleable fuel assembly characterised in that at least one of the end plates is connected to at least one connecting rod or tube by the arrangement according to one of claims 1 to 7.

0 073 728

FIG.1

FIG.2

FIG.3

**FIG.4**

**FIG.5**

**FIG.6**

50

53

41

42

43

**B** ← | → **A**

**FIG.7**

51

47

49

↑C

**FIG.8**

**FIG.9**

**FIG.10**

0 073 728

FIG.11

FIG.12

FIG.13

17